# EUROPEAN PATENT SPECIFICATION

(11) **EP 1 375 158 B1**
(45) Date of publication and mention of the grant of the patent: **08.09.2010**
(21) Application number: 02717071.1
(22) Date of filing: 04.04.2002
(51) Int. Cl.: B41J 2/175, B41J 2/06, B41J 2/01, B41J 2/165

(54) **REFRESH INK EJECTION DEVICE**
TINTENSTRAHLAUSSTOSSVORRICHTUNG
DISPOSITIF DE JET D'ENCRE

(30) Priority: 06.04.2001 JP 2001108076
(43) Date of publication of application: 02.01.2004
(73) Proprietor: Ricoh Printing Systems, Ltd., Minato-ku Tokyo (JP)
(72) Inventor: YAMADA, Takahiro, Hitachi Printing Solutions Ltd., Hitachinaka-shi, Ibaraki 312-8502 (JP); SATOU, Kunio, Hitachi Printing Solutions Ltd., Hitachinaka-shi, Ibaraki 312-8502 (JP); KOBAYASHI, Shinya, Hitachi Printing Solutions Ltd., Hitachinaka-shi, Ibaraki 312-8502 (JP); KIDA, Hitoshi, Hitachi Printing Solutions Ltd., Hitachinaka-shi, Ibaraki 312-8502 (JP); SHIMIZU, Kazuo, Hitachi Printing Solutions Ltd., Hitachinaka-shi, Ibaraki 312-8502 (JP); CHAHN, Lee, Hitachi-shi, Ibaraki 319-1221 (JP)
(74) Representative: Howe, Steven
(86) International application number: PCT/JP2002/003396
(87) International publication number: WO 2002/083425

(56) References cited:
- EP-A1- 0 755 790
- US-A- 3 769 627
- US-A- 4 010 477
- US-A- 4 097 872
- US-A- 4 122 458
- US-A- 4 667 207

## Description

### TECHNICAL FIELD

The present invention relates to an inkjet recording device, and more particularly to a high-speed inkjet recording device including a refresh ink ejection device capable of performing ink refresh operations without stopping recording operations.

### BACKGROUND ART

There have been proposed line-scan inkjet recording devices that print on a continuous recording sheet at high speed. This type of recording device includes a linear recording head that extends across the entire width of the continuous recording sheet. The recording head is formed with nozzles aligned in a row for ejecting ink. Each nozzle includes an ink chamber having an orifice and an energy generating member, such as a piezoelectric element or a heat generating element. When a driving voltage is applied to the energy generating member with the recording head facing the continuous recording sheet, then a pressure is applied to ink inside the ink chamber, whereby an ink droplet is ejected through the orifice. The ejected ink droplet impinges on the continuous recording sheet and thus forms a recording dot thereon. It is possible to control the ink droplet to impinge on a selected location on the continuous recording sheet based on a recording signal. The continuous recording sheet is rapidly transported in its longitudinal direction. By controlling both the sheet feedings and impact positions of ink droplets, recording dots are formed on scanning lines defined on the recording sheet, whereby a desired image is formed.

Various types of line-scan inkjet recording devices have been proposed, such as those using a continuous inkjet recording head and those using a drop-on-demand inkjet recording head. Although the drop-on-demand inkjet recording head has a slower printing speed than the continuous inkjet recording head, the drop-on-demand inkjet recording head has a simple ink system, and so is well suited for general-purpose high-speed recording device.

The present inventors have proposed an ink-droplet deflection type inkjet recording device that includes a charging/deflecting electrode in addition to the drop-on-demand type line-scan inkjet recording head. The charging/deflecting electrode is for deflecting ejected ink droplets so that the ink droplets impinge on desired locations on a recording sheet. The charging/deflecting electrode is disposed in confrontation with orifices to extend along a nozzle row. With this configuration, it is possible to control a plurality of ink droplets ejected from adjacent plural nozzles to impinge on a single pixel location in an overlapping manner. Therefore, even if one or more of nozzles become defective, it is possible to form recording dots using remaining nozzles. That is, the problem of missing information due to defective nozzles can be prevented. Moreover, unevenness in color density of resultant images due to unevenness in nozzle characteristics can be avoided, thereby enhancing reliability in printing operations.

Here, because the drop-on-demand type line-scan inkjet recording head ejects ink droplets in accordance with print data only when needed to form recording dots, some nozzles may not eject ink droplets for a relatively long period of time even during printing operations. If nozzles do not eject ink droplets for a certain time duration, ink clinging around corresponding orifices will dry out, preventing stable ink ejection. In order to overcome this problem, there has been proposed an inkjet recording device including a refresh ink ejection device.

A conventional refresh ink ejection device performs an ink refresh operation by stopping recording operations. Usually, the refresh ink ejection device moves a recording head to a predetermined refreshing position and then control the recording head to eject refresh ink droplets toward an ink receiving member. Japanese Patent Application-Publication No. 2000-211159 discloses a refresh ink ejection device that moves an ink receiving member to a location between a recording head and a recording sheet without moving the recording head. Because there is no need to move the recording head to a refreshing position, an ink refresh operation takes less time duration. A refresh ink ejection device disclosed in Japanese Patent Application-Publication No. HEI-11-334106 performs ink refresh operations without moving a recording head nor an ink collection member. The ink receiving member is disposed between the recording head and a recording sheet at a location away from an ink ejection direction. Ejected refresh ink droplets are deflected toward the ink receiving member by an air current or an electrostatic force and are collected by the ink receiving member without impinging on the recording sheet.

However, no matter which type of the above refresh ink ejection device an inkjet recording device includes, ink refresh operations require to stop printing operations with a resultant reduce in overall printing speed. Also, even when only a small number of refresh ink droplets are required to be ejected for maintaining a good ink ejection performance, excessive refresh ink droplets are inevitably ejected for mechanical reasons, so that ink is wasted more than necessary. Further, there has been difficult to use the conventional refresh ink ejection devices in the above-described high-speed line-scan inkjet recording device that prints on a continuous recording sheet using a recording head having a width of the recording sheet for following reasons.

That is, ink ejection frequency greatly differs among nozzles of the recording head having such a head. For example, nozzles located near side edges of the sheet eject inks least frequently. However, even these nozzles need to reliably eject ink in a stable manner when required. Accordingly, it is necessary to perform the ink refresh operations at timings suitable for these nozzles. As a result, the recording operations are disrupted frequently and actual printing speed is greatly decreased.

Further, it is difficult to precisely and quickly stop and restart transporting a continuous recording sheet that is being transported rapidly, and so is difficult to print a high-quality image in succession.

Moreover, in order to dispose the ink receiving member between the recording head and the recording sheet, it is necessary to widen a gap between the recording head and the recording sheet. However, widening the gap between the recording head and the recording sheet degrades printing quality. It is also necessary to provide a sufficient gap between the ink receiving member and the recording sheet. Otherwise, the ink receiving member will be an obstacle to transport the recording sheet, causing paper jam. These problems of recording-quality degradation and paper jam are serious particularly in a device that collects refresh ink droplets by deflecting the same, because in this type of device, it is necessary, for deflecting the refresh ink droplets by a sufficient amount, to widen the gap or to shorten a distance between the ink receiving member and the recording sheet.

In view of forgoing, it is an object of the present invention to overcome the above problems and also to provide a refresh ink ejection device capable of ejecting necessary amount of refresh ink anytime when needed. It is also an object of the present invention to provide an inkjet recording device including a refresh ink ejection device that prevents degradation of printing quality and sheet jam by disposing an ink receiving member without widening a gap between a recording head and a recording sheet.

Documents US 4,122,458, US 4,097,872, US 4,667,207, US 3,769,627 and US 4,010,477 all disclose apparatus for deflecting ink drops in an inkjet printer.

### DISCLOSURE OF THE INVENTION

In order to overcome the above and other objects, a refresh ink ejection device according to the present invention comprises an ink ejection means for generating and ejecting an ink droplet, an ink collector for collecting the ink droplet, and a deflecting means for deflecting the ink droplet ejected from the ink ejection means so that the ink droplet impinges on the ink collector, and is characterized by that the deflecting means includes a conductive member having the same potential as ink that the ink ejection means holds, the conductive member being disposed in vicinity of where the ink droplet is generated, a back electrode disposed behind a recording medium; and a voltage application means for applying a voltage between the conductive member and the back electrode for generating a deflecting electric field, and that the ink droplet ejected from the ink ejection means is deflected by the deflecting electric field and then impinges on the ink collector, and that the ink collector is provided on a surface of the conductive member, the surface facing the recording medium.

With this configuration, the ink droplet ejected by the ink ejection means is deflected by the deflecting electric field generated by the voltage applying means and travels along a u-turn path toward the ink collector. Therefore, the ink droplet is collected by the ink collector without reaching the recording medium. Because the ink collector provided to the surface of the conductive member that is facing the recording medium, there is no need to increase a gap between the ink ejection element and the recording medium by a large amount in order to place the ink collector, preventing degrading recording precision and paper jam.

The deflecting electric field is preferably an angle deflecting electric field having a field element in a direction perpendicular to an ink ejection direction of the ink ejection means. With this configuration, the ink droplet is effectively deflected.

It is preferable that the conductive member have a protrusion protruding toward the back electrode. Alternatively the conductive member could include an orifice plate formed with a nozzle and a conductive plate provided on the orifice plate. With this configuration, the angled deflecting electric field can be easily generated. Also, the conductive member and the ink collector could be formed integrally with each other.

The ink collector could be an ink absorbing member. Alternatively, a narrow groove for leading ink could be formed in a surface of the ink collector. With this configuration, the ink droplet impinged on the ink collector is reliably collected.

The ink residing on the ink collector can be collected by using an ink receiving member that includes a vacuum pump or a large-capacity ink absorbing member connected to the ink collector.

Further, an advantageous embodiment is defined in claim 11.

With this configuration, the recording ink droplet ejected by the first control means impinges on the recording medium and forms a recording dot. On the other hand, the refresh ink droplet ejected by the second control means is deflected by the angled deflecting electric field to flying along a U-turn path toward the ink collector, so that the refresh ink droplet is collected by the ink collector without reaching the recording medium. Because the ink is collected by the ink collector provided to the surface of the conductive member facing the recording medium, there is no need to increase a gap between the ink ejection means and the recording medium by a large amount, preventing degradation in recording precision and paper jam. Further, because the second control means can control to eject a selected number of refresh ink droplets at a selected timing, waste of ink is prevented, and the operation is performed flexibly.

The first control means can control to eject the recording ink droplet based on a recording signal during a recording operation, and the second deflecting means can control to eject the refresh ink droplet during a time interval where no recording ink droplet is ejected during the recording operation, without stopping the recording operation. Because there is no need to stop the recording operation for ejecting the refresh ink droplet, it is possible to avoid decrease in throughput. Further, because there is no need to stop and then restart transporting the recording medium, it is possible to form high-quality images continuously, so that the present invention is well adopted to a high-speed line-scanning inkjet recording device that forms images on a uncut-elongated recording medium.

It is preferable that the second control means control the ink ejection means to eject the refresh ink droplet at a lower ejection speed than the recording ink droplet. The refresh ink droplet ejected at a slow ejection speed is more easily deflected by the angled deflecting electric field and thus reliably collected by the ink collector.

It is preferable that the refresh ink droplet have a smaller weight than the recording ink droplet. The refresh ink droplet having a smaller weight is more easily deflected by the angled deflecting electric field and thus reliably collected by the ink collector.

It is preferable to provide a charging means for charging the refresh ink droplet and the recording ink droplet, the charging means charging the refresh ink droplet to a larger potential than the recording ink droplet. The refresh ink droplet charged with a greater potential is more easily deflected by the angled deflecting electric field and thus reliably collected by the ink collector.

The deflecting electric field is preferably an angled deflecting electric field having a field element in a direction perpendicular to an ink ejection direction of the ink ejection means. With this configuration, the ink droplet is effectively deflected.

### BRIEF DESCRIPTION OF DRAWINGS

Fig. 1 shows a configuration of an inkjet recording device including a refresh ink ejection device according to a first embodiment of the present invention.
Fig. 2 is an enlarged perspective view of a recording head module of the inkjet recording device of Fig. 1.
Fig. 3 shows an arrangement of a charging electrode of the inkjet recording device of Fig. 1.
Fig. 4 shows an equipotential surface of an angled deflection electric field generated by the deflection electrode arrangement of Fig. 3;
Fig. 5 is an explanatory view showing recording operations and ink refresh operations performed by the inkjet recording device of Fig. 1.
Fig. 6 is an enlarged perspective view showing a portion of a recording head module that includes an refresh ink ejection device according to a second embodiment of the present invention.
Fig. 7 shows an arrangement of a deflection electrode of an inkjet recording device that includes a refresh ink ejection device according to a third embodiment of the present invention.

### BEST MODE FOR CARRYING OUT THE INVENTION

Next, inkjet recording devices including refresh ink ejection devices according to embodiments of the present invention will be described with reference to attached drawings.

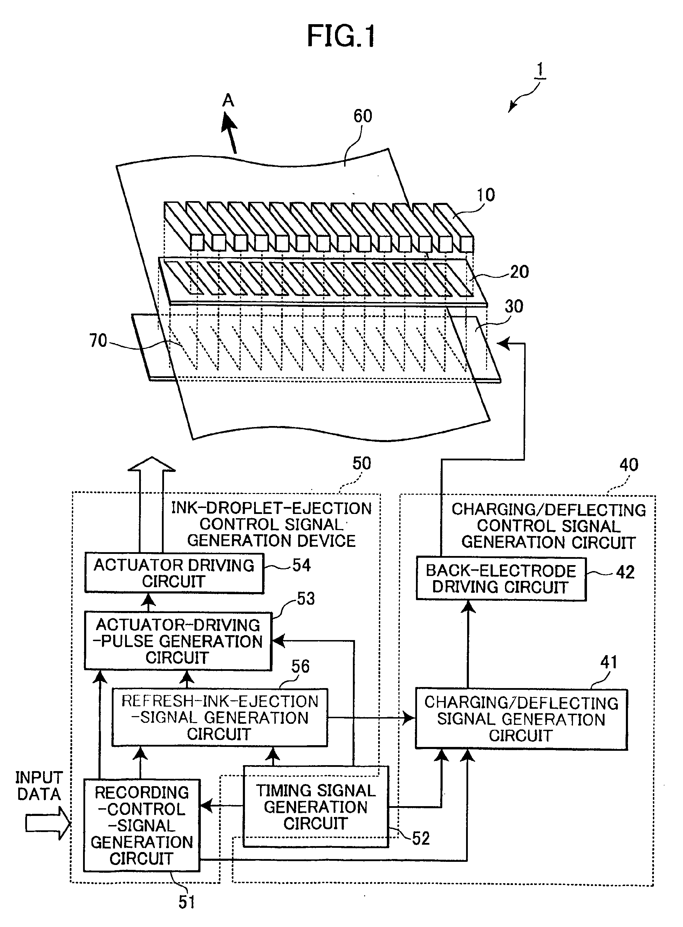

Fig. 1 shows an inkjet recording device 1 including a refresh ink ejection device according to an embodiment of the present invention. The inkjet recording device 1 is an ink-droplet deflection drop-on-demand line-scan recording device. As shown in Fig. 1, the inkjet recording device 1 includes a recording head module mounter 20, a back electrode 30, a charging/deflecting control signal generation circuit 40, and an ink-droplet-ejection control signal generation device 50. The recording head module mounter 20 mounts a plurality of recording head modules 10. The back electrode 30 is disposed at the rear of a recording sheet 60 so as to confront the recording head module mounter 20 via a sheet transport path. The charging/deflecting control signal generation circuit 40 is for supplying charging/deflecting signal to the back electrode 30. The ink-droplet-ejection control signal generation device 50 is for controlling ejection of ink droplets based on input data from an external device.

The charging/deflecting control signal generation circuit 40 includes a charging/deflecting signal generation circuit 41 and a back-electrode driving circuit 42. The ink-droplet-ejection control signal generation device 50 includes a recording-control-signal generation circuit 51, a timing signal generation circuit 52, an actuator-driving-pulse generating circuit 53, an actuator driving circuit 54, and a refresh-ink-ejection-signal generation circuit 56.

The timing signal generation circuit 52 generates a timing signal, and outputs the timing signal to the recording-control-signal generation circuit 51, the actuator-driving-pulse generating circuit 53, the refresh-ink-ejection-signal generation circuit 56, and the charging/deflecting signal generation circuit 41.

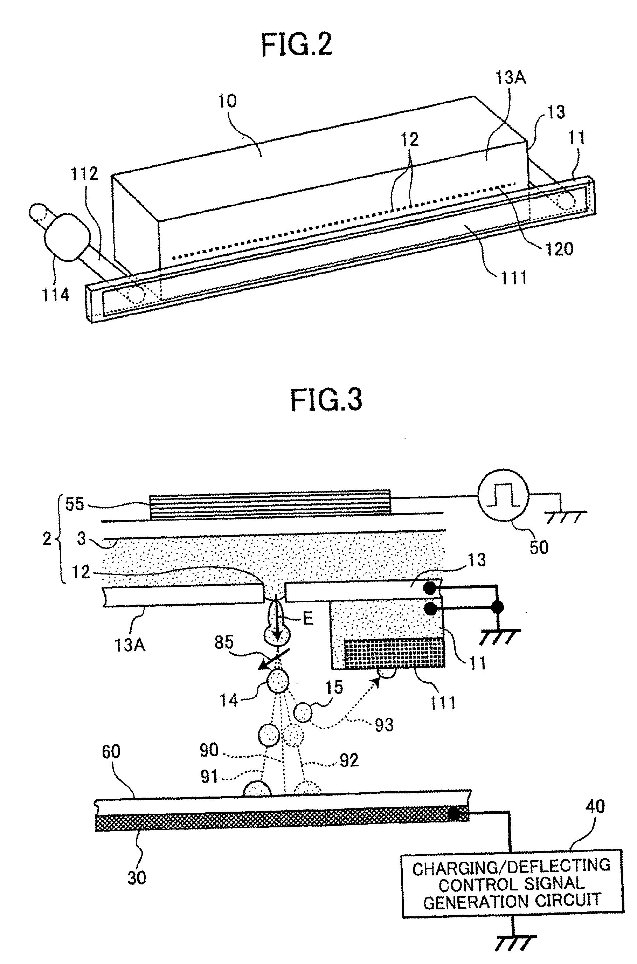

The recording-control-signal generation circuit 51 generates recording control signals based on the input data and the timing signal, and outputs the same to the actuator-driving-pulse generating circuit 53, the refresh-ink-ejection-signal generation circuit 56, and the charging/deflecting signal generation circuit 41. The refresh-ink-ejection-signal generation circuit 56 generates a refresh-ink-ejection actuator driving signal based on the recording control signal, and outputs the same to the actuator-driving-pulse generating circuit 53 and the charging/deflecting signal generation circuit 41. The actuator-driving-pulse generating circuit 53 generates a recording pulse signal based on the recording control signal and also generates a refresh-ink-ejection pulse signal based on the refresh ink-ejection-actuator driving signal. The recording pulse signal and the refresh-ink-ejection pulse signal are both ink droplet ejection control signal for driving an actuator 55 (Fig. 3) of the recording head module 10 to be described later. The actuator driving circuit 54 amplifies the recording pulse signal and the refresh-ink ejection pulse signal to an appropriate level for driving the actuator 55.

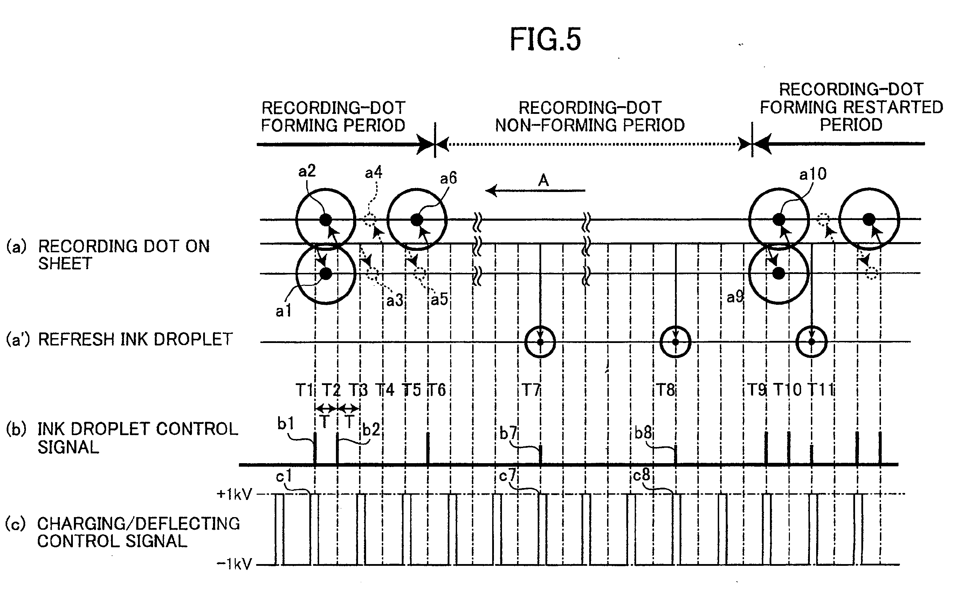

The charging/deflecting signal generation circuit 41 generates a predetermined charging/deflecting signal (voltage) based on the timing signal from the timing signal generation circuit 52 and on the recording control signal from the recording-control-signal generation circuit 51 or on the refresh-ink-ejection actuator driving signal from the refresh-ink-ejection-signal generation circuit 56, and output the same to the back-electrode driving circuit 42. The back-electrode driving circuit 42 amplifies the charging/deflecting signal to a predetermined voltage, and then outputs the same to the back electrode 30. As shown in Fig. 5(c), the charging/deflecting voltage from the back-electrode driving circuit 42 periodically changes between +1KV and -1KV.

Next, configuration of the recording head module 10 will be described. The recording head module 10 is an on-demand linear inkjet recording head module. As shown in Fig. 2, each recording head module 10 has an orifice plate 13 made of conductive material, such as metal. The orifice plate 13 is formed with an orifice row 120 including n-number of orifices 12 aligned equidistance from one another. Each orifice 12 has a diameter of about 30µm. The orifice plate 13 has an orifice surface 13A, on which an orifice electrode/ink receiving member 11 is provided. The orifice electrode/ink receiving member 11 serves as an electrode for generating an angled electric field and as an ink collector for receiving refresh ink droplets.

Here, the orifice plate 13, the orifice electrode/ink receiving member 11, the back electrode 30 together provide as the refresh ink ejection device of the present embodiment.

The recording head module 10 will be further described. As shown in Fig. 3, the recording head module 10 has n-number of nozzle elements 2 (only one nozzle element 2 is shown in Fig. 3). The nozzle elements 2 have the same configuration, and each has the orifice 12 formed in the orifice plate 13, a pressure chamber 3, and the actuator 55, such as a piezoelectric element. The pressure chamber 3 has the orifice 12 as its opening end, and houses ink therein. The actuator 55 is attached to the pressure chamber 3. The ink-droplet-ejection control signal from the ink-droplet-ejection control signal generation device 50 is input to the actuator 55. Although not shown in the drawings, each recording head module 10 is further formed with ink inlet ports for introducing ink to the pressure chambers 3 and a manifold for supplying ink to the ink inlet ports.

When the ink-droplet-ejection control signal from the ink-droplet-ejection control signal generation device 50 is applied to the actuator 55, then the actuator 55 changes the volume of the pressure chamber 3, thereby ejecting an ink droplet through the orifice 12. In the present embodiment, when the ink-droplet-ejection control signal from the ink-droplet-ejection control signal generation device 50 is the recording pulse signal, then a recording ink droplet 14 with a mass of about 10ng is ejected to an ejection direction E, that is, a direction perpendicular to the recording sheet 60, at a velocity of 5m/s. On the other hand, when the ink-droplet-ejection control signal is the refresh-ink-ejection pulse signal, then a refresh ink droplet 15 with a mass of about 7ng is ejected in the ejection direction E at a velocity of 2.5m/s. Thus ejected ink droplets 14, 15 will fly straight along an undeflected ink droplet flying path 90 and impinge on the recording sheet 60 if not deflected. However, in the present embodiment, the ink droplets 14, 15 are deflected. Details will be described later.

The orifice electrode/ink receiving member 11 shown in Fig. 2 is an electrically conductive plate made of metal or the like to a thickness of about 0.5mm, for example, and is disposed near where ink droplets to be ejected from the nozzle elements 2 are generated. In the present embodiment, the orifice electrode/ink receiving member 11 is attached on the orifice surface 13A of the orifice plate 13 about 300µm away from the orifice row 120 to extend along the orifice row 120. The orifice electrode/ink receiving member 11, the orifice plate 13, and the ink inside the nozzle elements 2 are all grounded.

As shown in Figs. 2 and 3, the orifice electrode/ink receiving member 11 has a lower surface (surface that faces to the recording sheet) 11A, in which an ink absorbing member 111 having a thickness of about 0.2mm is embedded. The ink absorbing member 111 could be a plate made of stainless steel fibers or a porous stainless steel of sintered compact. As shown in Fig. 2, the ink absorbing member 111 is connected to an ink absorbing pipe 112 and a vacuum pump 114 provided to the sides of the recording head module 10. Ink in the ink absorbing member 111 spreads due to capillary action, and is discharged through the ink absorbing pipe 112 due to a negative pressure generated by the vacuum pump 114.

As shown in Figs. 1 and 3, the back electrode 30 is a flat plate formed of conductive material, such as metal, and is disposed parallel to the orifice surface 13A at a position about 1.5mm distanced from the orifice surface 13A. Because the charging/deflecting control voltage from the charging/deflecting control signal generation circuit 40 is applied to the back electrode 30, the back electrode 30 has a potential corresponding to the charging/deflecting control voltage. Because the charging/deflecting control voltage of the present embodiment changes between +1KV and -1KV as mentioned above, the voltage of the back electrode 30 also changes between +1KV and -1KV.

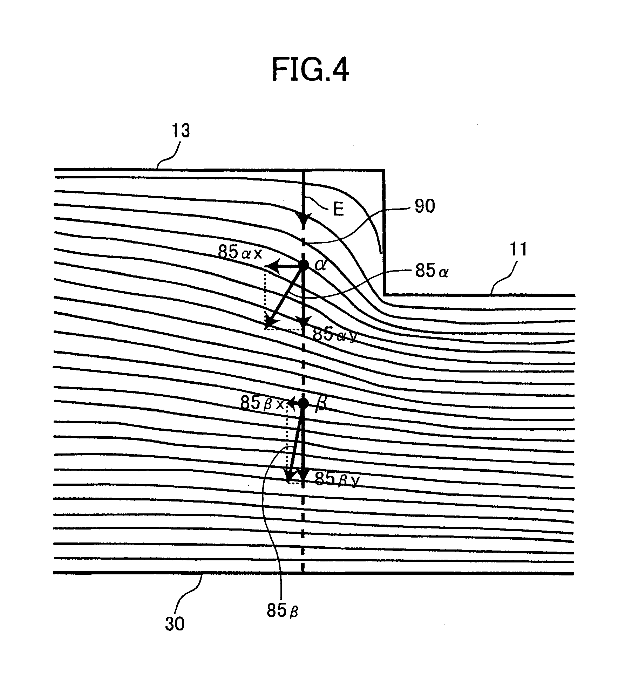

As described above, the orifice electrode/ink receiving member 11 and the orifice plate 13 are grounded. Therefore, when the charging/deflecting control voltage of -1KV is applied to the back electrode 30, then an electric field is generated among the orifice electrode/ink receiving member 11 and the orifice plate 13 and the back electrode 30. Fig. 4 shows an equipotential surface 80 of the electric field. As will be understood from Fig. 4, the direction of the electric field is angled with respect to the ejection direction E near the undeflected ink droplet flying path 90, thereby generating the angled electric field 85. For example, an angled electric field 85 α generated at a location *α* has a field element 85 α x in a direction perpendicular to the undeflected ink droplet flying path 90 and a field element 85 α y in a direction parallel to the ejection direction E.

Therefore, in Fig. 3, the ink droplets 14, 15 ejected through the orifice 12 are charged because of the charging/deflecting control signal generated in the charging/deflecting control signal generation circuit 40, and then deflected to a direction perpendicular to the undeflected ink droplet flying path 90, i.e., in a direction perpendicular to the ejection direction E, by the angled electric field 85. That is, in Fig. 4, the ink droplets are deflected by the filed component 85 α x of the angled electric field 85 at the location α.

More specifically, an ink droplet ejected through the orifice 12 is positively or negatively charged with a predetermined charging amount depending on the potential of the back electrode 30 at the time of the ejection, and then deflected by the angled electric field 85. A positively charged recording ink droplet 14 is deflected leftward in Fig. 3 by the angled electric field 85, and flies along a flight path 91. On the other hand, a negatively charged recording ink droplet 14 is deflected rightward in Fig. 3 by the angled electric field 85, and flies along a flight path 92. Therefore, by controlling ejection and nonejection of a recording ink droplet 14 and by controlling a deflection direction of a recording ink droplet 14, it is possible to form a desired image with recording dots 70 (Fig. 1) on the recording sheet 60.

Here, as will be understood from Fig. 4, the component 85 α of the angled electric field 85 in the location α that is an early flight stage of a recording ink droplet 14 is more angled with respect to the undeflected ink droplet flying path 90 than the component 85β in a location β that is later flight stage. This indicates that the field component 85 α x deflects an ink droplet more than do the component 85 *β* x. Therefore, it is possible to greatly deflect the recording ink droplet 14 in its early flight stage, and also to further deflect the recording ink droplet 14 while the recording ink droplet 14 keeps flying. In this manner, it is possible to effectively deflect the charged recording ink droplet 14. Here, when the charged recording ink droplet 14 is deflected by the angled electric field 85, the recording ink droplet 14 receives an influence of field components 85 α y and 85 *β* y also. This accelerates or decelerates the recording ink droplet 14 in the ink droplet ejection direction E depending on its polarity.

On the other hand, the refresh ink droplet 15 is set to be negatively charged, and as shown in Fig. 3, reaches the ink absorbing member 111 after flying along a U-turned flight path 93. This is because that the refresh ink droplet 15 is lighter in weight and ejected in lower ejection speed than the recording ink droplet 14, and that the refresh ink droplet 15 is easily deflected by the angled electric field 85.

Next, an operation of the inkjet recording device 1 will be described while referring to a specific example. In a recording operation in this example, recording ink droplets 14 ejected from a single orifice 12 are deflected. In this recording operation, while keep feeding a recording sheet 60, as shown in Fig. 5, a recording-dot forming period for forming recording dots on the recording sheet 60 and a recording-dot non-forming period for forming no recording dots are alternatively repeated. Here, the recording-dot non-forming period includes, for example, periods between letters, between ruled lines, and between graphics where no recording dots are formed. The recording-dot non-forming period also includes a recording sheet transporting period between pages where no recording dots are formed. In the present embodiment, a recording-dot forming period following a recording-dot non-forming period is referred to as a recording-dot re-forming period.

Fig. 5(a) shows recording dots formed on the recording sheet 60, and Fig. 5(a') shows refresh ink droplets 15. Fig. 5(b) shows the ink droplet ejection control signals (recording pulse signals and refresh-ink-ejection pulse signals) from the ink-droplet-ejection control signal generation device 50. Fig. 5(c) shows the charging/deflecting control signal generated in the charging/deflecting control signal generation circuit 40. It should be noted that the recording sheet 60 is transported in a direction indicated by an arrow A in Fig. 1 at a constant speed by a transporting mechanism (not shown).

First, in a first recording-dot forming period, a recording pulse b1 is applied to the actuator 55 at a time T1 shown in Fig. 5(b). As a result, a recording ink droplet 14 is ejected through an orifice 12 slightly after the time T1. At this time, a charging/deflection control voltage c1 of +1KV is being applied to the back electrode 30, so that the recording ink droplet 14 ejected in response to the pulse b1 is negatively charged, and flies toward the recording sheet 60. During the flight, as shown in Fig. 5(c), the charging/deflection control voltage is switched to - 1KV, whereby the angled electric field 85 is generated. The charged recording ink droplet 14 is deflected by the angled electric field 85, flies along the flight path 92 shown in Fig. 3, and form a recording dot on the recording sheet 60 at a dot position a1 (Fig. 5(a)). Here, the recording ink droplet 14 is decelerated during its flight.

When a time period T elapses, as shown in Fig. 5(b), a pulse b2 is applied to the actuator 55 at a time T2. As a result, a recording ink droplet 14 is ejected slightly after the time T2. At this time, a charging/deflection control voltage of -1KV (Fig. 5(c)) is being applied to the back electrode 30, so that the recording ink droplet 14 ejected in response to the pulse b2 is positively charged. Because the charging/deflection control voltage is maintained of - 1KV while the positively charged recording ink droplet 14 is flying, the recording ink droplet 14 is deflected by the angled electric field 85 and flies along the flight path 91 shown in Fig. 3. Eventually, the recording ink droplet 14 impinges on the recording sheet 60, and forms a recording dot on a dot location a2 (Fig. 5(a)). In this case, the recording ink droplet 14 is accelerated during the flight.

When a next time duration T elapses, no pulse signal is applied to the actuator 55 at a time T3 (Fig. 5(b)), so that no ink droplet is ejected. Accordingly, no recording dot is formed on a dot location a3 shown in Fig. 5(a). When next and subsequent time durations T elapse, no ink droplet is ejected at time T4 or T5, so that no recording dot is formed on dot locations a4 and a5.

At time T6, in the same manner as when the recording dot is formed on the dot location a2 (Fig. 5(a)), an recording ink droplet 14 ejected in response to a recoding pulse b6 is positively charged because of the charging/deflecting control signal of -1KV. The recording ink droplet 14 is deflected by the angled electric field 85 and forms a recording dot on a dot location a6. After repeatedly performing the above operations, a desired image is obtained on the recording sheet 60 as shown in Fig. 5(a).

After the above operations in the recording-dot forming period are completed, a recording-dot non-forming period stars. In this period, no ink droplet 14 is ejected through the orifice 12. Therefore, there is a danger that ink clinging around the orifice 12 dries and get dense, and that thus condensed ink prevents stable ejection of the recording ink droplet 14 at the early stage of a subsequent recording-dot forming period, preventing precise recording.

In order to overcome the above problems, in the present embodiment, refresh ink droplets 15 are ejected at predetermined timing during the recording-dot non-forming period. That is, as shown in Fig. 5(b), refresh-ink-ejection pulse signals b7 and b8 are applied to the actuator 55 at time T7 and T8, respectively. Because the width of the refresh-ink-ejection pulse signals b7 and b8 is set smaller than that of the recording pulses b1 and b2, it is possible to eject light refresh ink droplets 15 at a reduced ejection speed compared with the recording ink droplets 14. These refresh ink droplets 15 are negatively charged by the charging/deflecting control signals c7 and c8 of +1KV, respectively, and start flying toward the recording sheet 60. However, because the refresh ink droplets 15 are light and ejected at the reduced speed, the refresh ink droplets 15 are decelerated by the angled electric field 85 and forced back toward the orifice plate 13. At the same time, the refresh ink droplets 15 are deflected in a direction perpendicular to the ejection direction E by the angled electric field 85. As a result, the refresh ink droplets 15 fly along the U-turned flight path 93 shown in Fig. 3 as described above, and reaches the ink absorbing member 111 of the orifice electrode/ink receiving member 11.

It should be noted that if the voltage of the charging/deflecting control signals c7, c8 for the refresh ink droplets 15 is set greater than that of the charging/deflecting control signal c1 and the like for the recording ink droplets 14, the refresh ink droplet 15 is charged to a greater charging amount. This makes easier to deflect the refresh ink droplet 15 in U-turn. Accordingly, the refresh ink droplet 15 is further reliably collected while reliably preventing the refresh ink droplet 15 from impinging on the recording sheet 60.

When the above recording-dot non-forming period ends, the recording-dot re-forming period starts. Recording ink droplets 14 are ejected at time T9 and T10, and recording dots are formed on dot locations a9 and a10. Because the above-described ink refresh operations prevent the ink clinging near the orifice 12 from getting dense, the recording ink droplets 14 are properly and stably ejected even at the time T9 and time T10 which are relatively early stage of the recording-dot re-forming period. Therefore, the recording dots are properly formed on the dot locations a9 and a10.

As described above, according to the refresh ink ejection device, it is possible to individually and precisely control each one of refresh ink droplets 15. Therefore, it is possible to eject a necessary amount of, that is, even one refresh ink droplet 15 at an optimum timing.

Also, because the ink absorbing member 111 is embedded in the orifice electrode/ink receiving member 11, the ink absorbing member 111 does not cause paper jam. Further, it is unnecessary to increase a gap between the recording head module 10 and the recording sheet 60 in order to place the ink absorbing member 111, so that preciseness in recording is prevented from degrading.

In the above embodiment, refresh ink droplets 15 are ejected at predetermined timings during the recording-dot non-forming period. However, it is also possible to eject refresh ink droplets 15 during the recording-dot re-forming period also. In this case, the refresh-ink-ejection-signal generation circuit 56 monitors the ejection conditions of recording ink droplets 14 from each orifice 12 based on the recording control signal. Then, if ink-droplet non-ejection condition lasts for a long period time, then the refresh-ink-ejection actuator driving signal is generated for ejecting a refresh ink droplet 15. For example, in Fig. 5(b), if no recording ink droplet 14 is ejected after a predetermined time has elapsed since the recording ink droplet 14 has been ejected at the time T10, then the refresh ink droplet 15 is ejected at time T11 a predetermined time duration after the time T10. In this manner, the refreshing operation is performed even in the recording-dot forming period by generating the refresh ink droplet 15 during time interval where the recording ink droplet 14 is not ejected without stopping the recording operation. Accordingly, decrease in throughput can be prevented even if there is an orifice 12 that does not perform ink ejection for a long period time. Also, proper ink ejecting operations are maintained because there is no need to wait the refreshing operations until the recording-dot non-forming period. In this case, a timer for measuring a time duration since the ink ejection was last performed could be provided for each one of the nozzle element 2.

According to the present embodiment, even a single refresh ink droplet 15 can be ejected in the refreshing operation, so that it is possible to eject only a minimum amount of ink without ejecting more than necessary amount of ink, preventing wasting ink. Further, the ink refresh operation can be performed only for necessary nozzle element 2. There is no need to perform the ink refresh operation for all of the nozzle elements 2 at the same time. It is possible to perform ink refresh operation at timing and frequency appropriate for each nozzle element 2 in accordance with the ink ejection condition thereof.

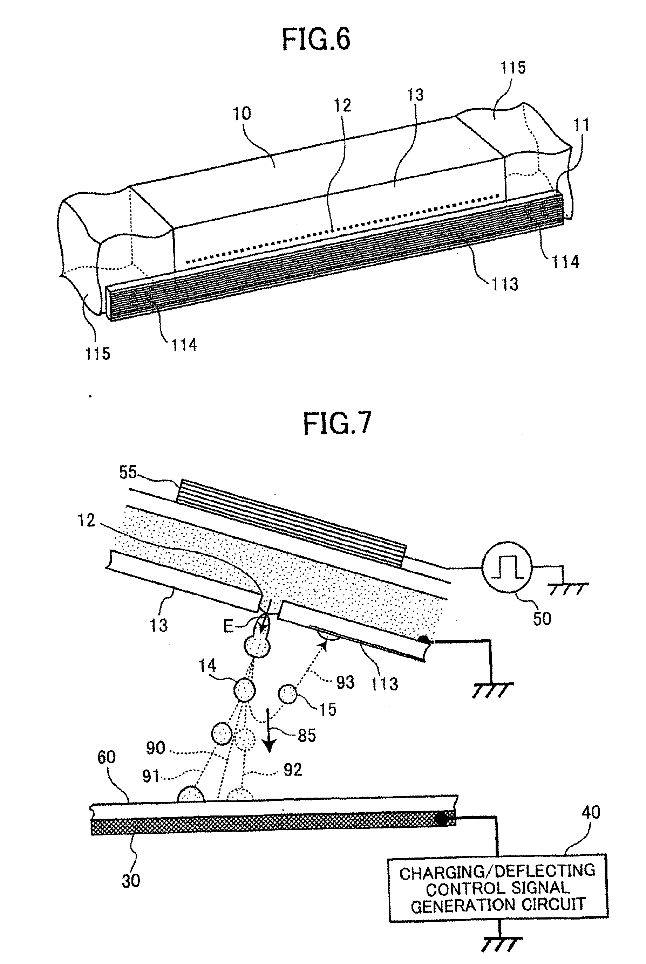

Next, a second embodiment of the present invention will be described while referring to Fig. 6. In the present embodiment, the recording head module 10 is attached with an orifice-electrode/ink receiving member 110 shown in Fig. 6 rather than the orifice electrode/ink receiving member 11 shown in Fig. 2. Ink grooves 113 are formed in the lower surface of the ink absorbing member 111 to extend in the longitudinal direction of the orifice-electrode/ink receiving member 110 at a pitch of approximately 160µm. The ink grooves 113 are narrow grooves for directing ink, and have a width of approximately 80 µm, and a depth of approximately 80 µm. The orifice-electrode/ink receiving member 110 is formed with ink outlet ports 114 penetrating through its longitudinal ends. A pair of ink absorbing members 115 formed of sponge material or the like to have a large absorbing capacity are disposed behind the orifice-electrode/ink receiving member 110 to be embedded in the ink outlet ports 114.

In this configuration, the refresh ink droplet 15 reached the orifice-electrode/ink receiving member 110 after flying along a U-turn path spreads across the ink grooves 113 due to capillary action and then absorbingly collected into the ink absorbing members 115 through the ink outlet ports 114. In this configuration, the vacuum pump can be dispensed with. Needless to say, it is possible to provide the ink absorbing pipe 112 shown in Fig. 2 connected to the ink outlet ports 114 so as to collect ink using the ink absorbing pipe 112.

Next, a third embodiment will be described with reference to Fig. 7. The present embodiment uses the orifice plate 13 inclined with respect to the back electrode 30 without the orifice electrode/ink receiving member 11. This configuration also can generate the angled electric field 85 having an element perpendicular to the undeflected ink droplet flying path 90 so is capable of deflecting ink droplets. The ink grooves 113 rather than the orifice electrode/ink receiving member 11 is formed in a bottom surface of the orifice plate 13. The refresh ink droplet 15 traveled along a U-turn path reaches the ink grooves 113 and collected therethrough.

In this configuration, it is possible to form the back electrode 30 to have an arc shape, such as a drum shape.

While some exemplary embodiments of this invention have been described in detail, those skilled in the art will recognize that there are many possible modifications and variations which may be made in these exemplary embodiments while yet retaining many of the novel features and advantages of the invention.

For example, it is possible to use the ink absorbing members 115 shown in Fig. 6 rather than the ink absorbing pipe 112 shown in Fig. 2 in the first embodiment.

Also, in any of the above-describe embodiments, it is possible to control a plurality of ink droplets ejected from different nozzles 12 onto the same pixel or vicinity of the same pixel in overlapping manner by setting the nozzle pitch, controlling ink ejection from the nozzles 12, and selecting deflection direction and deflection amount in an appropriate manner, so that even when one or more nozzle element 2 becomes defective, allotted recording dots can be reliably formed using remaining nozzle elements 2. In this manner, a highly reliable inkjet recording device can be provided. Also, because each pixel is recorded using a plurality of nozzle elements 2, unevenness in color density appearing on resultant images can be prevented.

Although the recording ink droplets in the above embodiments are deflected to one of two directions so as to fly along either the flight path 91 or the flight path 92 at both sides of the undeflected ink droplet flying path 90, there is no limitation in the number of the deflecting directions and in the deflecting amount.

Needles to say, the recording ink droplet could be controlled to fly along the flying path 90 without being deflected at a11. In this case, only the refresh ink droplets are deflected to fly along the U-turn path.

### INDUSTRIAL APPLICABILITY

Refresh ink droplets ejected by ink refresh operations are collected by an ink receiving member provided to the conductive member that generates a deflection electric field. Accordingly, there is no need to increase a gap between an ink ejection means and a recording sheet, so that it is possible to prevent decrease in recording precision and paper jam. Also, because the ink refresh operations are performed without stopping recording operations, stable ink ejection is maintained without sacrificing the throughput.

Further, because a necessary ink element only individually performs the ink refresh operation using only a necessary amount of ink, waste of ink is avoided. Because the same deflecting electric element deflects both the recording ink droplets and the refresh ink droplets, the device can have a simple configuration.

## Claims

1. A refresh ink ejection device comprising an ink ejection means (2) for generating and ejecting an ink droplet (15), an ink collector (111, 113) for collecting the ink droplet (15), and a deflecting means for deflecting the ink droplet (15) ejected from the ink ejection means (2) so that the ink droplet (15) impinges on the ink collector (111, 113), the refresh ink ejection device being **characterized by** that:
the deflecting means includes:
a conductive member (11, 110, 13) having the same potential as ink that the ink ejection means (2) holds, the conductive member being disposed in vicinity of where the ink droplet (15) is generated;
a back electrode (30) disposed behind a recording medium (60); and
a voltage application means (40) for applying a voltage between the conductive member (11, 110, 13) and the back electrode (30) for generating a deflecting electric field (85) ;
the ink droplet (15) ejected from the ink ejection means (2) is deflected by the deflecting electric field (85) and then impinges on the ink collector (111, 113); and
the ink collector (111, 113) is provided on a surface (11A) of the conductive member (11, 110, 13), the surface facing the recording medium.

2. The refresh ink ejection device according to claim 1, wherein the deflecting electric field (85) is an angled deflecting electric field having a field element (85 α x) with a direction perpendicular to an ink ejection direction (E) of the ink ejection means (2) .

3. The refresh ink ejection device according to claim 2, wherein the conductive member (11, 110, 13) has a protrusion (11, 110) protruding toward the back electrode (30) .

4. The refresh ink ejection device according to claim 2 , wherein the conductive member (11, 110 , 13) includes an orifice plate (13) formed with an orifice (12) and a conductive plate (11, 110) provided on the orifice plate (13) .

5. The refresh ink ejection device according to any of claims 1 through 4, wherein the conductive member (11, 110, 13) is formed integrally with the ink collector (111, 113).

6. The refresh ink ejection device according to claim 5, wherein the ink collector (111) is an ink absorbing member.

7. The refresh ink ejection device according to claim 5, wherein the ink collector (113) is a narrow groove for leading ink.

8. The refresh ink ejection device according to claim 6 or 7, further comprising an ink receiving member (114, 115) connected to the ink collector (111, 113) for collecting ink residing on the ink collector (111, 113).

9. The refresh ink ejection device according to claim 8, wherein the ink receiving member (114) includes a vacuum pump for collecting ink by suctioning the ink.

10. The refresh ink ejection device according to claim 8, wherein the ink receiving member (115) includes a large-capacity ink absorbing member for absorbing the ink residing on the ink collector by capillary action.

11. The refresh ink ejection device according to any of claims 1 to 10, wherein the refresh ink ejection device is an inkjet recording device, and also comprises a first control means (51) for controlling the ink ejection means (2) to eject an recording ink droplet (14), and a second control means (56) for controlling the ink ejection means (2) to eject a refresh ink droplet (15)
and wherein the deflecting electric field (85) deflects the recording ink droplet (14) as needed, wherein the deflected recording ink droplet impinges on the recording medium (60).

12. The refresh ink ejection device according to claim 11, wherein the first control means (51) controls the ink ejection means to eject the recording ink droplet (14) based on a recording signal during a recording operation, and the second deflecting means (56) controls the ink ejection means to eject the refresh ink droplet (15) during a time interval where no recording ink droplet (14) is ejected during the recording operation, without stopping the recording operation.

13. The refresh ink ejection device according to claim 11 or 12, wherein the second control means (56) controls the ink ejection means to eject the refresh ink droplet (15) at a lower ejection speed than the recording ink droplet (14).

14. The refresh ink ejection device according to claim 11 or 12, wherein the refresh ink droplet (15) has a smaller weight than the recording ink droplet (14).

15. The refresh ink ejection device according to claim 11 or 12, further comprising a charging means (40) for charging the refresh ink droplet (15) and the recording ink droplet (14), the charging means (40) charges the refresh ink droplet (15) to a larger potential than the recording ink droplet (14)

16. The refresh ink ejection device according to claim 11, wherein the deflecting electric field (85) is an angled deflecting electric field having a field element (85 α x) in a direction perpendicular to an ink ejection direction (E) of the ink ejection means (2).

## Patentansprüche

1. Auffrischungstintenausstoßvorrichtung mit einem Tintenausstoßmittel (2) zum Erzeugen und Ausstoßen von Tintentröpfchen (15), einem Tintensammler (111, 113) zum Auffangen der Tintentröpfchen (15) und ein Ablenkmittel zum Ablenken der von dem Tintenausstoßmittel (2) ausgestoßenen Tintentröpfchen (15), so dass die Tintentröpfchen (15) auf den Tintensammler (111, 113) fallen, wobei die Auffrischungstintenausstoßvorrichtung **dadurch gekennzeichnet ist, dass** das Ablenkmittel Folgendes beinhaltet:
ein leitendes Element (11, 110, 13) mit demselben Potential wie Tinte, die sich in dem Tintenausstoßmittel (2) befindet, wobei das leitende Element in der Nähe des Ortes angeordnet ist, an dem die Tintentröpfchen (15) erzeugt werden;
eine hintere Elektrode (30), die hinter einem Aufzeichnungsmedium (60) angeordnet ist; und
ein Spannungsanlegmittel (40) zum Anlegen einer Spannung zwischen dem leitenden Element (11, 110, 13) und der hinteren Elektrode (30) zum Erzeugen eines elektrischen Ablenkfeldes (85);
wobei die aus dem Tintenausstoßmittel (2) ausgestoßenen Tintentröpfchen (15) von dem elektrischen Ablenkfeld (85) abgelenkt werden und dann auf den Tintensammler (111, 113) fallen; und
wobei der Tintensammler (111, 113) auf einer Oberfläche (11A) des leitenden Elementes (11, 110, 13) vorgesehen ist, wobei die Oberfläche dem Aufzeichnungsmedium zugewandt ist.

2. Auffrischungstintenausstoßvorrichtung nach Anspruch 1, wobei das elektrische Ablenkfeld (85) ein schräges elektrisches Ablenkfeld mit einem Feldelement (85 α x) mit einer Richtung lotrecht zu einer Tintenausstoßrichtung (E) des Tintenausstoßmittels (2) ist.

3. Auffrischungstintenausstoßvorrichtung nach Anspruch 2, wobei das leitende Element (11, 110, 13) einen Vorsprung (11, 110) hat, der in Richtung auf die hintere Elektrode (30) vorsteht.

4. Auffrischungstintenausstoßvorrichtung nach Anspruch 2, wobei das leitende Element (11, 110, 13) eine mit einem Loch (12) versehene Lochplatte (13) und eine auf der Lochplatte (13) vorgesehene leitende Platte (11, 110) aufweist.

5. Auffrischungstintenausstoßvorrichtung nach einem der Ansprüche 1 bis 4, wobei das leitende Element (11, 110, 13) einstückig mit dem Tintensammler (111, 113) ausgebildet ist.

6. Auffrischungstintenausstoßvorrichtung nach Anspruch 5, wobei der Tintensammler (111) ein Tinte absorbierendes Element ist.

7. Auffrischungstintenausstoßvorrichtung nach Anspruch 5, wobei der Tintensammler (113) eine schmale Nut zum Führen von Tinte ist.

8. Auffrischungstintenausstoßvorrichtung nach Anspruch 6 oder 7, die ferner ein Tintenaufnahmeelement (114, 115) umfasst, das mit dem Tintensammler (111, 113) verbunden ist, um auf dem Tintensammler (111, 113) befindliche Tinte aufzufangen.

9. Auffrischungstintenausstoßvorrichtung nach Anspruch 8, wobei das Tintenaufnahmeelement (114) eine Vakuumpumpe zum Sammeln von Tinte durch Aufsaugen der Tinte beinhaltet.

10. Auffrischungstintenausstoßvorrichtung nach Anspruch 8, wobei das Tintenaufnahmeelement (115) ein Tinte absorbierendes Element mit hoher Kapazität zum Absorbieren der auf dem Tintensammler befindlichen Tinte durch Kapillarwirkung beinhaltet.

11. Auffrischungstintenausstoßvorrichtung nach einem der Ansprüche 1 bis 10, wobei die Auffrischungstintenausstoßvorrichtung eine Tintenstrahl-Aufzeichnungsvorrichtung ist und auch ein erstes Steuermittel (51) zum Steuern des Tintenausstoßmittels (2) umfasst, um Aufzeichnungstintentröpfchen (14) auszustoßen, und ein zweites Steuermittel (56) zum Steuern des Tintenausstoßmittels (2), um Auffrischungstintentröpfchen (15) auszustoßen,
und wobei das elektrische Ablenkfeld (85) die Aufzeichnungstintentröpfchen (14) nach Bedarf ablenkt, wobei die abgelenkten Aufzeichnungstintentröpfchen auf das Aufzeichnungsmedium (60) fallen.

12. Auffrischungstintenausstoßvorrichtung nach Anspruch 11, wobei das erste Steuermittel (51) das Tintenausstoßmittel so steuert, dass es die Aufzeichnungstintentröpfchen (14) auf der Basis eines Aufzeichnungssignals während eines Aufzeichnungsvorgangs ausstößt, und das zweite Ablenkmittel (56) das Tintenausstoßmittel so steuert, dass es die Auffrischungstintentröpfchen (15) während eines Zeitintervalls ausstößt, in dem keine Aufzeichnungstintentröpfchen (14) während des Aufzeichnungsvorgangs ausgestoßen werden, ohne den Aufzeichnungsvorgang zu stoppen.

13. Auffrischungstintenausstoßvorrichtung nach Anspruch 11 oder 12, wobei das zweite Steuermittel (56) das Tintenausstoßmittel so steuert, dass die Auffrischungstintentröpfchen (15) mit einer geringeren Ausstoßgeschwindigkeit ausgestoßen werden als die Aufzeichnungstintentröpfchen (14).

14. Auffrischungstintenausstoßvorrichtung nach Anspruch 11 oder 12, wobei die Auffrischungstintentröpfchen (15) ein geringeres Gewicht haben als die Aufzeichnungstintentröpfchen (14).

15. Auffrischungstintenausstoßvorrichtung nach Anspruch 11 oder 12, die ferner ein Lademittel (40) zum Laden der Auffrischungstintentröpfchen (15) und der Aufzeichnungstintentröpfchen (14) umfasst, wobei das Lademittel (40) die Auffrischungstintentröpfchen (15) auf ein größeres Potential auflädt als die Aufzeichnungstintentröpfchen (14).

16. Auffrischungstintenausstoßvorrichtung nach Anspruch 11, wobei das elektrische Ablenkfeld (85) ein schräges elektrisches Ablenkfeld mit einem Feldelement (85 α x) in einer Richtung lotrecht zu einer Tintenausstoßrichtung (E) des Tintenausstoßmittels (2) ist.

## Revendications

1. Dispositif d'éjection d'encre de rafraîchissement comprenant un moyen d'éjection d'encre (2) pour générer et éjecter une gouttelette d'encre (15), un collecteur d'encre (111, 113) pour collecter la gouttelette d'encre (15), et un moyen de déflexion pour défléchir la gouttelette d'encre (15) éjectée par le moyen d'éjection d'encre (2) de telle sorte que la gouttelette (15) frappe le collecteur d'encré (111, 113), le dispositif d'éjection d'encre de rafraîchissement étant **caractérisé en ce que** :
le moyen de déflexion comporte :
un élément conducteur (11, 110, 13) ayant le même potentiel que l'encre que renferme le moyen d'éjection d'encre (2), l'élément conducteur étant disposé au voisinage de l'endroit où la gouttelette d'encre (15) est générée ;
une contre-électrode (30) disposée derrière un support d'enregistrement (60) ; et
un moyen d'application de tension (40) pour appliquer une tension entre l'élément conducteur (11, 110, 13) et la contre-électrode (30) pour générer un champ électrique de déflexion (85) ;
la gouttelette d'encre (15) éjectée du moyen d'éjection d'encre (2) est défléchie par le champ électrique de déflexion (85) puis frappe le collecteur d'encre (111, 113) ; et
le collecteur d'encre (111, 113) est aménagé sur une surface (11A) de l'élément conducteur (11, 110 ,13), la surface faisant face au support d'enregistrement.

2. Dispositif d'éjection d'encre de rafraîchissement selon la revendication 1, dans lequel le champ électrique de déflexion (85) est un champ électrique de déflexion incliné ayant un élément de champ (85 α x) ayant un sens perpendiculaire à un sens d'éjection d'encre (E) du moyen d'éjection d'encre (2).

3. Dispositif d'éjection d'encre de rafraîchissement selon la revendication 2, dans lequel l'élément conducteur (11, 110, 13) a une protubérance (11, 110) saillant vers la contre-électrode (30).

4. Dispositif d'éjection d'encre de rafraîchissement selon la revendication 2, dans lequel l'élément conducteur (11, 110, 13) comporte une plaque à orifice (13) formée avec un orifice (12) et une plaque conductrice (11, 110) montée sur la plaque à orifice (13).

5. Dispositif d'éjection d'encre de rafraîchissement selon l'une quelconque des revendications 1 à 4, dans lequel l'élément conducteur (11, 110, 13) est formée en tant que partie intégrante du collecteur d'encre (111, 113).

6. Dispositif d'éjection d'encre de rafraîchissement selon la revendication 5, dans lequel le collecteur d'encre (111) est un élément absorbeur d'encre.

7. Dispositif d'éjection d'encre de rafraîchissement selon la revendication 5, dans lequel le collecteur d'encre (113) est une gorge étroite pour conduire l'encre.

8. Dispositif d'éjection d'encre de rafraîchissement selon la revendication 6 ou 7, comprenant en outre un élément récepteur d'encre (114, 115) rattaché au collecteur d'encre (111, 113) pour collecter l'encre qui réside sur le collecteur d'encre (111, 113).

9. Dispositif d'éjection d'encre de rafraîchissement selon la revendication 8, dans lequel l'élément récepteur d'encre (114) comporte une pompe à vide pour collecter l'encre en aspirant l'encre.

10. Dispositif d'éjection d'encre de rafraîchissement selon la revendication 8, dans lequel l'élément récepteur d'encre (115) comporte un élément absorbeur d'encre de grande capacité pour absorber par action capillaire l'encre qui réside sur le collecteur d'encre.

11. Dispositif d'éjection d'encre de rafraîchissement selon l'une quelconque des revendications 1 à 10, dans lequel le dispositif d'éjection d'encre de rafraîchissement est un dispositif d'enregistrement à jet d'encre, et comprend également un premier moyen de commande (51) pour commander le moyen d'éjection d'encre (2) afin d'éjecter une gouttelette d'encre d'enregistrement (14), et un second moyen de commande (56) pour commander le moyen d'éjection d'encre (1) afin d'éjecter une gouttelette d'encre de rafraîchissement (15)
et dans lequel le champ électrique de déflexion (85) défléchit la gouttelette d'encre d'enregistrement (14) comme il convient, la gouttelette d'encre d'enregistrement défléchie frappant le support d'enregistrement (60).

12. Dispositif d'éjection d'encre de rafraîchissement selon la revendication 11, dans lequel le premier moyen de commande (51) commande le moyen d'éjection d'encre afin d'éjecter la gouttelette d'encre d'enregistrement (14) en fonction d'un signal d'enregistrement durant une opération d'enregistrement, et le second moyen de commande (56) commande le moyen d'éjection d'encre afin d'éjecter la gouttelette d'encre de rafraîchissement (15) durant un intervalle de temps pendant lequel aucune gouttelette d'encre d'enregistrement (14) n'est éjectée durant l'opération d'enregistrement, sans arrêter l'opération d'enregistrement.

13. Dispositif d'éjection d'encre de rafraîchissement selon la revendication 11 ou 12, dans lequel le second moyen de commande (56) commande le moyen d'éjection d'encre afin d'éjecter la gouttelette d'encre de rafraîchissement (15) à une vitesse d'éjection inférieure à celle de la gouttelette d'encre d'enregistrement (14).

14. Dispositif d'éjection d'encre de rafraîchissement selon la revendication 11 ou 12, dans lequel la gouttelette d'encre de rafraîchissement (15) a un poids inférieur à celui de la gouttelette d'encre d'enregistrement (14).

15. Dispositif d'éjection d'encre de rafraîchissement selon la revendication 11 ou 12, comprenant en outre un moyen de chargement (40) pour charger la gouttelette d'encre de rafraîchissement (5) et la gouttelette d'encre d'enregistrement (14), le moyen de chargement (40) chargeant la gouttelette d'encre de rafraîchissement (15) à un potentiel supérieur à celui de la gouttelette d'encre d'enregistrement (14).

16. Dispositif d'éjection d'encre de rafraîchissement selon la revendication 11, dans lequel le champ électrique de déflexion (85) est un champ électrique de déflexion incliné ayant un élément de champ (85 a x) ayant un sens perpendiculaire à un sens d'éjection d'encre (E) du moyen d'éjection d'encre (2).
